# EUROPEAN PATENT APPLICATION

(11) **EP 4 847 900 A1**
(43) Date of publication of application: **02.12.2026**
(21) Application number: 25179048.1
(22) Date of filing: 27.05.2025
(51) Int. Cl.: G01M 11/02

(54) **MEASUREMENT OF A MECHANICAL WEDGE VIA ALIGNED POINT CLOUD DATA**

(71) Applicant: Carl Zeiss Vision International GmbH, 73430 Aalen (DE)
(72) Inventor: Frank, Uwe, 73430 Aalen (DE)
(74) Representative: Carl Zeiss AG - Patentabteilung

(57) **Abstract**

The present invention relates to a computer-implemented method, a computer-implemented device, a system and a computer program for acquiring a plurality of measurement data points which are associated with a physical topology of the first surface of a spectacle lens, acquiring a plurality of design data points which are associated with a design topology of the first surface of the spectacle lens, calculating a difference between the acquired plurality of measurement data points and the acquired plurality of design data points to obtain a plurality of residual data points and deriving an angle between the plurality of residual data points and the acquired plurality of design data points, wherein the angle is indicative for the deformation of the first surface of the spectacle lens.

## Description

The present invention relates to a computer-implemented method, a computer-implemented device, a system and a computer program for determining a deformation of a surface of a lens.

Lenses such as spectacle lenses represent a commonly used type of lenses which are typically applied to correct ametropia. Spectacle lenses belong to ophthalmic lenses, which may be provided as spectacle lenses, contact lenses, intraocular lenses and/or as any other type of lenses suitable for an envisaged application; ophthalmic lenses are precision optical devices designed to correct vision defects and enhance visual acuity. The term "spectacle lens" is understood as an ophthalmic lens worn in front of, but not in contact with, the eye. It is understood that lenses to be inserted into a XR-device (eXtended Reality device) such as an AR, MR or VR display device fall under the term "spectacle lens".

These spectacle lenses are manufactured to meet design specifications and to ensure optimal performance and optical properties for a desired application. The design specification may, *inter alia,* be related to material thickness, material selection, stresses in the material, etc. However, these lenses are susceptible to deformations that can significantly impact their optical properties and effectiveness.

Deformations of lenses, such as spectacle lenses mentioned above, can arise from various sources. Thermal effects during the manufacturing process, particularly during the cooling-off phase after production, can lead to internal stresses and subtle shape changes. Additionally, the process of fitting lenses into frames can introduce mechanical stresses, potentially altering the lens geometry and affecting its optical characteristics.

Typical lenses may comprise two lens surfaces, notable a front surface and a back surface, which are arranged in a specific manner to fulfill desired optical parameters. That is, an ideal lens may be referred to as a lens comprising two surfaces which meet an intended design.

However, in case thermal and/or mechanical stresses are caused in the lens, one or both surfaces may be deformed effectively leading to a deviation of the shape of the lens from an intended lens design. This may be accompanied by unfavorable effects with regard to the respective lens such that the lens may deviate from its initially set design goals. The deviation of the parallelism of the two lens surfaces in the optical center may often be referred to as a wedge.

To ensure that a manufactured lens meets its design goals, a thorough characterization of the shape of lenses may be seen as crucial. Current methods for characterizing lens deformations often rely on complex measurement setups that require a systematic and precise scanning of the lens surface. This requires complex and expensive set-ups as well as careful alignment of the lenses within the setup with respect to certain reference points. These approaches are complex and time-consuming, demand high levels of operator expertise, and are prone to errors.

In this regard, DE 10 2014 208 636 B4 discloses a method for measuring a decentering and tilting of surfaces of an optical element, wherein at least all optically used and mount-relevant partial surfaces of a surface of the optical element and reference surfaces of the optical element are detected over their entire surface and are referenced to one another in a common coordinate system, and in each case a surface shape deviation of the partial surfaces and reference surfaces are each determined relative to an associated nominal surface stored for the optical element, wherein a position of the partial surfaces and reference surfaces in the common coordinate system is determined from the respective surface shape deviation, wherein at least one tilt and at least one decentration are determined from the position as a function of a shape of the respective partial surface and reference surface in the coordinate system.

DE 10 2017 006 345 A1 discloses a method for determining the decentration of a transmissive actual optic in relation to a transmissive target optic with ideally oriented optical surfaces in a reference coordinate system or for determining the thickness of a lens or the distance between lenses of the optic, measuring points on several optical surfaces of the actual optic are detected with a scanning sensor using the transmitted light method.

WO 2009/124767 A1 discloses a device for measuring the topography of curved rotationally symmetrical or cylindrical surfaces, especially the surfaces of lenses. Said device comprises a topography sensor which is used to measure the topographical data of a point, a line or a spatial element on the surface. The topography sensor and the surface can be displaced in relation to each other in a plane of displacement. Said plane of displacement is arranged at an angle unequal 90° with respect to an axis of symmetry or plane of symmetry of the rotationally symmetrical or cylindrical surface. The device according to the invention is characterized by an additional centering sensor which allows the high-precision measurement of the axis of symmetry or plane of symmetry of the article, thereby making it, e.g., possible to measure merely half diagonal cuts through the surface and to determine the other half of the diagonal cuts by mirroring by calculation the measured half diagonal cuts on the axis of symmetry or plane of symmetry.

Thus, there is a need to further improve the characterization procedure of spectacle lenses. For example, the objective technical problem to be solved by the present invention may be seen in providing a precise and operator-friendly method for characterizing the shape of spectacle lenses which at least partially overcomes the known drawbacks.

According to a first aspect, a computer-implemented method for determining a deformation of a first surface of a spectacle lens is suggested. The method may comprise acquiring a plurality of measurement data points which are associated with a physical topology of the first surface of the lens and may comprise acquiring a plurality of design data points which are associated with a design topology of the first surface of the lens. Furthermore, the computer-implemented method may comprise calculating a difference between the acquired plurality of measurement data points and the acquired plurality of design data points to obtain a plurality of residual data points and deriving an angle between the plurality of residual data points and the acquired plurality of design data points, wherein the angle between the residual plane and known design is indicative for the deformation of the first surface of the lens.

The plurality of measurement data may be provided as a point cloud indicative of a physical shape of the first surface. References to the physical world, as set out herein, may refer to aspects which reflect the real, physical world. In an example, a reference to a physical topology may thus be referred to as a reference to empirically observable conditions of the physical topology.

The plurality of design data points may be provided as a point cloud indicative of a design shape of the first surface. References to a design, as set out herein, may refer to theory and/or ideal and intended circumstances, respectively. In an example, a reference to a design topology may be understood as a reference to an ideal topology, that is, a topology that was intended to be obtained when the spectacle lens was designed. In other words, a design parameter may be understood as a target state which should have been reached at the end of a manufacturing process such as, e.g., a respective design topology.

In an example, the residual data points and the design data points may each be approximated by a means which represents the respective data points at a higher level of abstraction. In such a case, the derived angle may denote an angle that is formed between the two respective approximations.

In an example, the computer-implemented method may further comprise providing the derived angle to an operator of the computer-implemented method, e.g., by means of a user interface (e.g., a (touch-sensitive) screen which may be configured to display the derived angle, a loudspeaker (by means of which the derived angle may be output as a spoken sequence or any other suitable acoustic means), a printer (which may be configured to print the derived angle on a piece of a paper), etc.). In an example, the user interface may be configured to enable a bidirectional communication of the user with the user interface, that is, the user interface may be configured to present information to the user and may be configured to receive input information from the user.

In an example, the acquiring of the plurality of measurement points and/or the acquiring of the plurality of design data points may comprise a receiving of the plurality of measurement points from the user interface.

This may simplify the characterization process of a lens, may enhance the overall accuracy of the characterization process, and may significantly reduce the time and expertise required for the analysis as no labor-intensive tasks are required. Therefore, a comprehensive, computation-efficient method for quantifying lens deformations may be provided.

In an embodiment, the calculating of the difference may further comprise fitting the plurality of residual data points to a theory function of a plane to obtain a representation of a residual plane which is associated with the plurality of residual data points.

As a result, the plurality of residual data points may be associated with a theoretical expression that may simplify the handling of residual information as it may not be required anymore to base the calculation of the difference on the individual data points but to use the theoretical approximation instead. Moreover, effectively replacing the individual data points by a respective theory function may allow a harmonization of potential outliers in the residual data points such that a more accurate representation of the residual information may be facilitated.

In a further embodiment, the acquiring of the plurality of design data points further may further comprise fitting the acquired plurality of measurement data points to a theory function of a sphere to obtain a representation of a sphere which is associated with the acquired plurality of measurement data points and determining coordinates of the center of the sphere of the representation of the sphere by subtracting a radius of the representation of the sphere from a center thickness of the representation of the sphere. Moreover, the plurality of design data points may be derived by means of a design sphere about (or through) the determined coordinates, wherein the plurality of design data points represents a best fit design of the plurality of measurement points.

The deriving of the design data points may comprise calculating and/or drawing (a virtual) sphere about the determined coordinates. Said sphere may be representative for a design of the spectacle lens (i.e., in absence of a deformation) and may thus represent a best fit design of the first surface of the spectacle lens.

The center thickness of the representation of the sphere may refer to a thickness of the spectacle lens in its physical representation. In some examples, the center thickness of the physical spectacle lens may be shifted (e.g., decreased) relative to the design of the spectacle lens.

The radius of the representation of the sphere may indicate a radius of the physical topology of the first surface of the spectacle lens.

As a result, the plurality of design data points may be associated with a theoretical expression that may simplify the handling of a design topology as basing the calculation of the difference on individual data points may be rendered obsolete. Instead, the usage of a theoretically motivated approximation may be implemented.

In a further embodiment, the deriving of the plurality of design data points may further comprise adding a sphere offset value to the derived coordinates of the center of the sphere to obtain the plurality of design data points

The sphere offset value may indicate a height of the sphere (as derived from the representation of the sphere) at certain x- and y-coordinates of the sphere in a three-dimensional space. In other words, the sphere offset value may effectively refer to z-coordinates of the sphere.

As a result, a representation of the physical sphere may be calculated, which may be associated with the shape of the first surface based on which a further characterization of the shape of the first surface may be performed.

In a further embodiment, the computer-implemented method may further comprise calculating a normal vector of the residual plane, determining a normal vector of the best fit design and calculating an angle between the normal vector of the residual plane and the normal vector of the design at a desired location, e.g., an optical center of the spectacle lens, wherein the angle is indicative of the deformation of the first surface of the spectacle lens.

A normal vector may be referred to as a vector that extends perpendicularly from a respective surface of a respective plane.

The calculating of the angle may allow an estimation of an extent of deformation of the first surface relative to a design surface indicated by the plurality design data points.

In a further embodiment, the calculating of the angle may further comprise calculating a scalar product between the normal vector of the residual plane and the normal vector of the best fit design and deriving the angle from the calculated scalar product.

The deriving of the angle from the calculated scalar product may effectively be based on the calculation of an inverse cosine function.

The calculation of the angle by means of the scalar product may allow an efficient calculation of the angle with minimized computational efforts. As a result, a fast determination of the deformation of the first surface may be obtained.

In a further embodiment, the acquiring of the plurality of measurement data points may comprise a retrieving of empirically obtained data points, preferably from a (chromatic) confocal microscope that is configured to sample the first surface of the spectacle lens.

The empirically obtained data points may refer to data points that are obtained from a measurement. The measurement may comprise a systematic sampling of the first surface of the ophthalmic lens. In some examples, the first surface may be sampled in a (predefined) pattern, i.e., the individual data points may be acquired such that they represent a certain pattern on the first surface of the spectacle lens.

Consequently, a detailed and efficient sampling of the first surface of the spectacle lens may be facilitated.

In a further embodiment, the plurality of empirically obtained data points may comprise at least five data points.

The number of empirically obtained data points may at least be a number of empirically obtained data points that may allow a reconstruction of the deformation of the first surface.

In some examples, the number of empirically data points may at least be 10, 50, 100, 500, 1000, 5000, 10000, 50000 or 100000. In some examples, the number of empirical data points may exceed 1000000.

By choosing a lower number of empirical data points, which is still sufficient to facilitate an accurate reconstruction of a potential deformation of the first surface, a fast and time-effective sampling of the first surface may be enabled.

In a further embodiment, the empirically obtained data points may be obtained such that they are representative of a sampling of the first surface of the spectacle lens, preferably in a pattern of a spiral.

Alternatively, the first surface may be sampled in a pattern of concentric circles. Irrespective of the pattern, the individual data points may be sampled in equidistant spatial separations from each other. In some cases, if the empirically obtained data points are sampled in a spiral pattern, the separation of the individual data points may increase proportional (e.g., linearly) with a radius of the spiral. In some examples, the first surface may also be sampled randomly, i.e., without a specified spatial pattern. In some examples, it may be required to ensure that sufficient data points are sampled to allow an execution of the computer-implemented method as disclosed herein with sufficient statistical accuracy. In some examples, it may be seen beneficial to avoid an oversampling (e.g., the acquisition of too many data points in a certain region of the first surface) to avoid an undesired weighting of certain regions of the first surface. In such a case, regions of the first surface, at which a higher number of data points is acquired (as compared to other regions of the first surface) may contribute more to the deriving of the angle as compared to regions of the first surface at which a smaller number of data points is acquired.

Sampling the first surface in a pattern of a spiral may allow a dense, detailed and consistent sampling of the first surface.

In a further embodiment, the computer-implemented method may further comprise aligning a second surface of the spectacle lens, which is arranged opposed to the first surface, with respect to a reference orientation.

The reference orientation may be relative to a reference axis of e.g. a characterization device.

Consequently, a determination of the deformation of the spectacle lens relative to the reference axis (of, e.g., a characterization device) may be facilitated.

In a further embodiment, the deformation of the first surface may be an optical wedge.

The optical wedge may change an optical path between an object and an observer. The observer may wear the spectacle lens as an eyewear.

The optical wedge may let the object appear to be located at a different position than it is.

It is emphasized that the deformation of the first surface may not exclusively refer to optical wedges. Also, other deformations of the first surface may be possible and may thus be characterized by aspects disclosed herein.

Therefore, the computer-implemented method disclosed herein may support a characterization of an optical wedge of a first surface. Therefore, an undesired altering of the optical properties of a spectacle lens, e.g., as a result of the presence of an optical wedge, may efficiently be determined.

In further detail, the aspects set out herein may support a characterization and determination, respectively, of a mechanical wedge of the spectacle lens as such. The mechanical wedge may subsequently be transformed into the optical wedge by taking respective material properties of the spectacle lens into account that are representative for a relationship between material properties and optical properties of the spectacle lens.

In a further embodiment, the spectacle lens may possess an atoroidal backside.

An atoroidal lens may be referred to as a specialized optical element characterized by an aspheric surface that lacks rotational symmetry. More specifically, an atoroidal lens may possess mutually perpendicular principal meridians of unequal curvature, wherein at least one of them has an asphericity.

This specific shape of the spectacle lens may enable a broad field of applications of the spectacle lens.

According to a second aspect, a computer program is provided. The computer program may comprise instructions which, when the program is executed by a computer, cause the computer to carry out the steps of the computer-implemented method as disclosed herein.

In some examples, a computer program product may be provided, which may comprise instructions that, when the computer program product is executed by a computer, cause the computer to perform the steps of the method as described herein. A computer program product, such as a computer program means, may for example be provided or delivered as a storage medium, such as a memory card, USB stick, CD-ROM, DVD, or in the form of a downloadable file from a server on a network. This can be done, for example, in a wireless communication network by transferring a corresponding file with the computer program product or the computer program means.

According to a third aspect, a computer-implemented device for determining a deformation of a first surface of a spectacle lens is provided. The computer-implemented device may comprise means for acquiring a plurality of measurement data points which are associated with a physical topology of the first surface of the spectacle lens and means for acquiring a plurality of design data points which are associated with a design topology of the first surface of the spectacle lens. Moreover, the computer-implemented device may comprise means for calculating a difference between the acquired plurality of measurement data points and the acquired plurality of design data points to obtain a plurality of residual data points and means for deriving an angle between the plurality of residual data points and the acquired plurality of design data points, wherein the angle is indicative for the deformation of the first surface of the spectacle lens.

In some examples, the means for acquiring the plurality of measurement data points and/or the means for acquiring the plurality of design data points may comprise a communication interface (e.g., Bluetooth, Wireless Fidelity (WiFi), Universal Serial Bus (USB), etc.) by means of which the respective data points may be retrieved from a remote entity such as, e.g., a remote server (e.g., comprising a database).

In some examples, the computer-implemented device may further comprise means for outputting the derived angle. The means for outputting may comprise a user interface (e.g., a (touch-sensitive) screen which may be configured to display the derived angle, a loudspeaker (by means of which the derived angle may be output as a spoken sequence or any other suitable acoustic means), a printer (which may be configured to print the derived angle on a piece of a paper), etc.). In some cases, the means for outputting may comprise means for storing the derived angle to a data file. In some examples, the derived angle may be represented as a data file or may be part of a data file. In some examples, the means for outputting may comprise means for outputting the derived angle to a remote entity. A remote entity may be referred to as a database, a computer, a cloud storage, etc.

In some examples, the means for acquiring the plurality of measurement data points and/or the means for acquiring the plurality of design data points may comprise means for receiving the respective data points from the user interface.

In an embodiment, the computer-implemented device may further comprise means for carrying out the steps of the computer-implemented method as disclosed herein and/or means for executing the computer program as disclosed herein.

The means for carrying out and/or the means for executing may be provided as a respective processor (e.g., as a central processing unit (CPU)) and/or a field programmable gate array (FPGA) and/or a graphics processing unit (GPU) and/or a tensor processing unit (TPU). In some examples, the respective means may comprise a memory as set out in further detail herein.

According to a fourth aspect, a system for determining a deformation of a first surface of a spectacle lens is provided. It may comprise the computer-implemented device as disclosed herein, and the computer program as disclosed herein.

In some examples, the system may be provided as an integrated system (comprising the respective means in a single entity). Alternatively, the system may be provided as a distributed system (wherein at least one of the means of the system is physically and/or logically separated from the respective other means).

In some examples, the determining of the deformation of the first surface of a spectacle lens may further comprise feeding back the determined deformation or the derived angle, respectively, to a manufacturing process of the spectacle lens. The feeding back may comprise adapting at least one parameter of the manufacturing process of the spectacle lens based on the determined deformation of the first surface and/or the derived angle, respectively. The at least one parameter may be adapted to decrease the deformation of the first surface of the spectacle lens in subsequent manufacturing processes. In some examples, the at least one parameter may be a process temperature of the manufacturing process, a temperature gradient during a cooling-off phase of the spectacle lens, a cooling time of the spectacle lens and/or another suitable at least one parameter which may affect the manufacturing process such that the output of the manufacturing process is improved. In this context, an improvement may be referred to as a decrease of the deformation of the first surface in subsequent manufacturing processes.

One or more algorithms/computer programs described herein may be embodied directly in hardware (e.g., by appropriate means of a computer-implemented device as, e.g., disclosed herein), in a software module executed by a processor, or in a combination of both. A software module may reside in random access memory (RAM), flash memory, read only memory (ROM), electrically programmable ROM (EPROM), electrically erasable programmable ROM (EEPROM), registers, a hard drive, a removable disc, a CD-ROM, or any other form of storage medium known in the art. An exemplary storage medium is coupled to the processor so that the processor can read information from the storage medium and write it to the storage medium. Alternatively, the storage medium can also be integrated into the processor. The processor and the storage medium can be housed in an application-specific integrated circuit (ASIC). Alternatively, the processor and the storage medium can be accommodated as discrete components in any component of a mobile computer platform. The computer program can also be executed on a field programmable gate array (FPGA), for example.

In this case, the term 'one' is not necessarily to be understood as being limited to exactly one element. Rather, several elements, such as two, three or more, can also be provided. Any other counting word used here is also not to be understood as meaning that there is a restriction to exactly the specified number of elements. Rather, numerical deviations upwards and downwards are possible, unless otherwise stated.

The embodiments and features described with respect to the device or system apply accordingly to the proposed method and vice versa.

Other possible implementations of the invention also include combinations of features or embodiments described above or below that are not explicitly mentioned herein. The skilled person will also add individual aspects as improvements or additions to the respective basic form of the invention.

The term *"means"* may be referred to as a single *"means"* (e.g., a single entity configured to provide a certain function). In some examples, the term *"means"* may also refer to a plurality of *"means"* (e.g., a plurality of entities configured to provide a certain functionality).

Further advantageous embodiments and aspects of the invention are the subject matter of the subclaims and of the examples of embodiments of the invention described below. In the following, the invention is explained in more detail by means of preferred embodiments with reference to the enclosed figures.
Fig. 1 shows a cross-sectional view of a spectacle lens;
Fig. 2 shows a cross-sectional view of a spectacle lens;
Fig. 3 shows an exemplary illustration of a best fit design of the front surface, acquired measurement data points, residual values and the obtained residual plane;
Fig. 4 shows an exemplary illustration of an optical effect occurring when an optical wedge is present in a spectacle lens;
Fig. 5 shows a flowchart of an exemplary computer-implemented method;
Fig. 6 shows an exemplary computer-implemented device; and
Fig. 7 shows an exemplary system.

In the figures, identical or functionally identical elements have been given the same reference symbols, unless otherwise indicated. It should also be noted that the representations in the figures are not necessarily to scale.

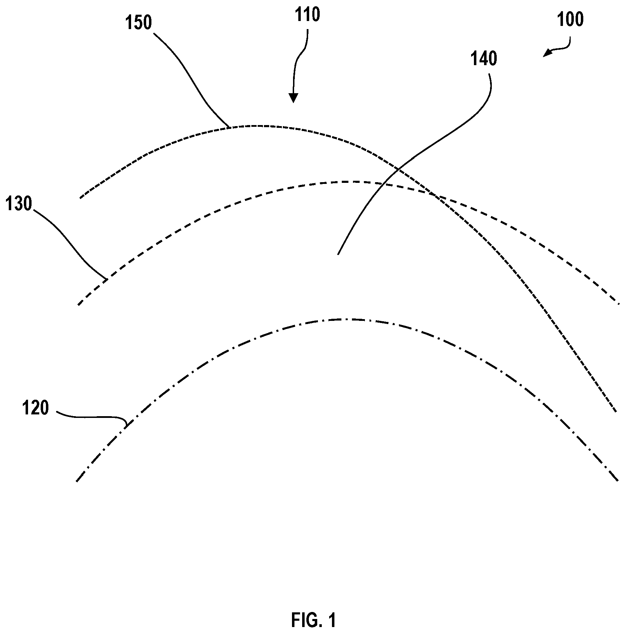

Fig. 1 shows an exemplary cross-sectional view of a lens100, such as a spectacle lens.

As mentioned before, an ophthalmic lens, in general, may be referred to as a vision-correcting or vision-enhancing optical device designed to be worn in direct contact with the eye or in close proximity to the eye. It typically comprises a transparent material with specific refractive properties to modify light rays entering the eye, thereby improving visual acuity or addressing various vision defects. Ophthalmic lenses encompass a wide range of devices, including but not limited to spectacle lenses, contact lenses, intraocular lenses, and specialized lenses for treating specific eye conditions.

Lenses, such as spectacle lenses, may incorporate various optical features such as spherical, cylindrical, or prismatic power corrections, as well as advanced designs like multifocal, progressive, or aspheric profiles. They can be manufactured using different materials and may include additional elements such as coatings, filters, or diffractive structures to enhance their performance or provide additional functionalities. Such lenses are specifically tailored to work in conjunction with the eye's natural optical system to produce clear, focused images on the retina, thereby correcting refractive errors like myopia, hyperopia, astigmatism, or addressing more complex visual needs.

The spectacle lens 100 comprises a first surface 110 and a second surface 120.

The first surface 110 may be associated with a design topology 130, i.e., a topology which follows ideal conditions to provide ideal optical properties for an intended application of the lens 100. The design topology 130 may be provided in absence of any unintended and undesired deformation of the first surface 110.

The design topology 130 may extend in parallel to the second surface 120 thereby forming a shell of a sphere 140 therebetween. It is emphasized that even though the depicted example assumes a spherical shell, also other design topologies 130 may be possible. In some examples, the first surface 110 may be aspheric, whereas the second surface 120 may be spheric or vice versa.

In some examples, the first surface 110 may not follow the design topology 130 but may instead follow a physical topology 150. The physical topology 150 may be deformed and/or shifted and/or rotated with respect to the design topology 130.

The deviation of the physical topology 150 from the design topology 130 may be referred to as a wedge. In some examples, this wedge may be seen as undesired as it may change the optical (transmission) properties (e.g., undesired birefringence, change of focal length, aberration, etc.) of the lens and may thus require a detailed characterization.

It will be appreciated that the physical topology 150 may be sampled by means of a variety of different options to obtain a plurality of empirically measurement points which may be indicative of the deformation of the first surface 110 of the lens 100. The physical topology may, *inter alia,* be sampled by means of confocal microscopy, by means of an autocollimator, by means of optical interferometry and/or by means of another suitable method.

In further detail, confocal microscopy may be referred to an advanced optical imaging technique that enables high-resolution, three-dimensional visualization of certain specimens. This method may employ a spatial pinhole to eliminate out-of-focus light, thereby significantly enhancing image contrast and resolution compared to conventional wide-field microscopy. In a confocal microscope, a laser beam may be focused onto a small spot within the sample, and the resulting fluorescence or reflected light is collected through the same optical path. The key feature is a confocal pinhole, which may allow only light from the focal plane to reach the detector, effectively rejecting light from above and below the focal plane. By scanning the focused beam across the sample (i.e., the surface of the spectacle lens) in a raster pattern and collecting light at each point, a two-dimensional image of a thin optical section is generated. Multiple such optical sections can be acquired at different depths within the sample, enabling the reconstruction of three-dimensional structures. This technique offers several advantages, including improved axial and lateral resolution, reduced background noise, and the ability to perform optical sectioning of thick specimens without physical sectioning.

Additionally or alternatively, the first surface 110 may also be sampled by means of an autocollimator. An autocollimator may be referred to as a high-precision optical instrument designed to measure small angular deviations and displacements with high accuracy. It may comprise a collimated light source, typically a reticle illuminated by an LED or laser, a beam splitter, an objective lens, and a detection system. The device may project a collimated beam of light onto a reflective surface, such as a mirror or polished surface, attached to the object being measured. The reflected beam may then be focused back through the objective lens and beam splitter onto the detection system. Any angular change in the reflective surface may cause a displacement of the returned image, which is measured by the detection system. This displacement is proportional to the angular deviation of the reflective surface, allowing for precise measurement of angular changes as small as fractions of an arc-second. Modern autocollimators may employ electronic detection systems, such as CCD or CMOS sensors, for real-time measurement and data processing. Autocollimators find applications in various fields, including optical alignment, metrology, machine tool calibration, and scientific research, where they are used for tasks such as measuring flatness, straightness, parallelism, and angular position with high precision.

Additionally or alternatively, the empirically obtained data points may be obtained by means of optical interferometry. An interferometer may be referred to as a high-precision optical instrument which may be designed to measure the surface topography of lenses with nanometer-scale accuracy. It may utilize the principle of wave interference to compare the optical path difference between a reference wavefront and the wavefront reflected from the lens surface under test. The device typically consists of a coherent light source, such as a laser, a beam splitter, reference and test arms, and a detector system. The coherent light is split into two beams: one directed towards a reference surface and the other towards the lens surface being measured. These beams are then recombined, creating an interference pattern that is captured by the detector. The resulting fringe pattern provides detailed information about the surface profile of the lens, including its curvature, irregularities, and deviations from the ideal shape. Advanced interferometers may incorporate phase-shifting techniques, computerized fringe analysis, and stitching algorithms to enhance measurement accuracy and expand the measurable area. This non-contact measurement method is particularly valuable in the optical industry for quality control, lens design verification, and manufacturing process optimization, as it allows for rapid and precise characterization of complex lens surfaces, including aspheric and freeform optics.

Additionally or alternatively, the empirically obtained data points may be obtained by means of chromatic confocal microscopy. Chromatic confocal microscopy may be referred to as an advanced optical imaging technique that may utilize the longitudinal chromatic aberration of microscope optics to generate different focal planes for various wavelengths of light. This method may enable the creation of cross-sectional confocal images of a specimen without the need for axial scanning of the objective lens.

In chromatic confocal microscopy, a laser beam may be focused onto a small point within a sample to be investigated, and the resulting fluorescence or reflected light may be collected through the same optical path. A confocal pinhole element may allow only light from the focal plane to reach the detector, blocking light from above and below the plane. By scanning the focused beam across the sample in a raster pattern and collecting light at each point, a two-dimensional image of a thin optical section is generated. Multiple such optical sections can be captured at different depths within the sample to reconstruct three-dimensional structures.

This technique may offer several advantages over other methods for acquiring empirically obtained data points, including improved axial and lateral resolution, reduced background noise, and the ability to perform optical sections of thick samples without physical cuts. Chromatic confocal microscopy may generally be usefulness in the optical industry for quality control, the verification of lens designs, and the optimization of manufacturing processes, as it may allow for rapid and precise characterization of complex lens surfaces.

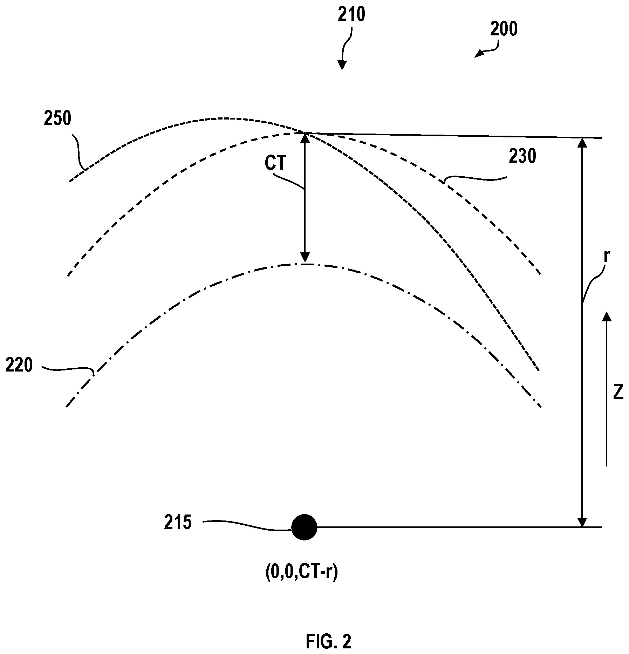

Fig. 2 shows a cross-sectional view of a spectacle lens 200 comprising a first surface 210 and a second surface 220 which may each be idealized as respective spheres. It is, however, emphasized that an idealization as a sphere may merely be seen as an example. Other suitable designs may equally be applicable. The first surface 210 of the lens 200 as set out herein may be identical to the first surface 110 as described with reference to Fig. 1, above. The second surface 220 of the lens 200 may be identical to the second surface 120 as described with reference to Fig. 1 above.

The first surface 210 may comprise a design topology 230 which may be identical to the design topology 130 as described with reference to Fig. 1 above.

The first surface 210 (ideally represented by the design topology 230) may be spatially separated from the second surface 220 of the lens by a center thickness CT of the lens 200. The center thickness CT may be identical to the center thickness 140 as described with reference to Fig. 1, above. The design topology 230 may be idealized as a sphere and may thus be associated with a design radius r and a sphere center at coordinates (0,0,CT-r).

In the depicted example, also the second surface 220 may be idealized as a sphere with a sphere center at coordinates (0,0,-r). In the absence of any deformations, the radius of the sphere associated with the second surface 220 may also be r.

In case the first surface 210 undergoes a deformation, a physical topology 250 may be obtained, wherein the physical topology 250 may be identical to the physical topology 150 of Fig. 1. The physical topology 250 may again be idealized as a sphere, wherein coordinates of the center of the sphere 215 of the physical topology 250 may be shifted due to the deformation of the first surface 210.

Starting with the coordinates of the sphere center 215 of the sphere that is associated with the physical topology 250, the coordinates of the measurement data points on the surface of the physical topology 250 z_{sph,wedge} may be obtained by adding a sphere offset value to the coordinates of the sphere center 215, which sphere offset value may read as $z = \sqrt{{r}^{2} - {x}^{2} - {y}^{2}} .$ equation 1

Here, *x, y* and *z* denote coordinate values in a three-dimensional cartesian coordinate system. Based thereon, the z-coordinates of the measurement data points of the first surface 210 (being representative for the physical topology 250) may be obtained from ${z}_{sph , wedge} \left(x, y\right) = CT - r + \sqrt{{r}^{2} - {x}^{2} - {y}^{2}} .$ equation 2

It is emphasized that the calculations set out with respect to equations 1 and 2 hold for the definition of the coordinate system as discussed above. The calculation is, however, not limited to the chosen coordinate system and may equally apply to other coordinate systems. Expressing the calculations associated with equations 1 and 2 with respect to other coordinate systems, the result of the calculation of the coordinates of the measurement data points of the first surface may be altered.

A respective plurality of residual data points may be obtained by subtracting the plurality of measurement data points *z_{sph,wedge}*(*x, y*) from the plurality of design data points *P_{design}*(*x, y*) as indicated by ${Res}_{FS , wedge} \left(x, y\right) = {P}_{design} \left(x, y\right) - {z}_{sph , wedge} \left(x, y\right) .$ equation 3

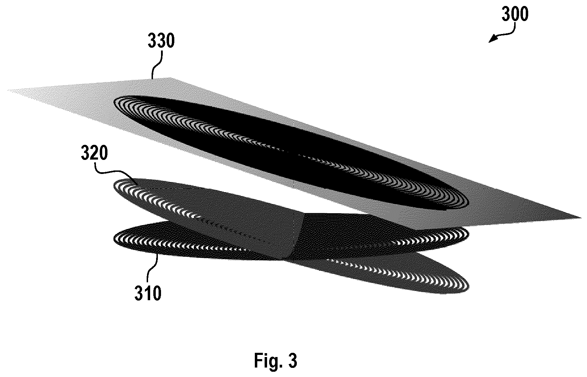

Fig. 3 shows an exemplary illustration of the relative orientations 300 of a best fit design surface 310, a measured surface 320 and a residual plane 330.

Initially, a plurality of measurement points was acquired to sample a first surface 110, 210 of a spectacle lens 100, 200. The second surface 120, 220 of the respective spectacle lens was used to align a measurement coordinate system (in which the plurality of measurement points was acquired) with a design coordinate system (a coordinate system relative to which the design topology of the lens may be referenced).

It may be known, based on *a priori* knowledge that the first surface 110, 210 is a spherical surface with a certain design radius and that the first surface 110, 210 and the second surface 120, 220 may be separated by a respective design center thickness, e.g., at coordinates x = 0 and y = 0.

However, in case a deformation of the first surface 110, 210 occurs, the front surface may be shifted and/or tilted with respect to the design of the first surface 110, 210.

The first surface 110, 210 may be sampled and represented by a plurality of measurement data points which are associated with a physical topology of the first surface 110, 210. The plurality of measurement data points may be fitted to a theory function of a sphere yielding a measurement front radius *r_{F}.* This sphere fit may be represented by the measured surface 320 depicted in Fig. 3.

Moreover, as the deformation may also affect the effective center thickness of the spectacle lens 100, 200, the resulting center thickness *CT_{F}* of the deformed spectacle lens 100, 200 may be determined at coordinates x = 0 and y = 0.

Based thereon, a best fit design may be obtained by fitting a sphere with center coordinates (0*,*0*,CF_{F} - r_{F}*) to the plurality of measurement points (according to equation 2) which enables the computation of the best fit design surface 310.

This may enable the calculation of the residuals, i.e., a deviation between the best fit design surface 310 and the measured surface 320. The obtained residuals may subsequently be fitted to a theory function of a plane to obtain a representation of the residual plane 330 which is associated with the respective residuals.

A theory function of a plane which may be used to approximate the plurality of residual data points by the residual plane 330 may follow the relationship $ax + by + z = d .$ equation 4

Here, *a, b,* and *d* represent scaling factors which may be obtained by fitting equation 4 to the plurality of residual data points to obtain a representation of the respective plurality of residual data points.

Based on a representation of the plurality of residual data points by the residual plane 330, a normal vector *n̅ᵣₑₛ,* oriented perpendicular to the residual plane 330 may be calculated which may be represented by: ${\vec{n}}_{res} = \left(\begin{matrix}a \\ b \\ 1\end{matrix}\right) .$ equation 5

Here, the normal vector of the residual plane 330 may be presentative for the direction along which the deformation (e.g., the optical wedge) occurred.

In analogy to equation 5, a normal vector *n̅_{design}* of the best fit design surface 310 may be calculated, which may be represented by: ${\vec{n}}_{design} = \left(\begin{matrix}0 \\ 0 \\ 1\end{matrix}\right) .$ equation 6

Based on the normal vector *n̅ᵣₑₛ* and the normal vector *n̅_{design},* a scalar product *n̅ᵣₑₛ · n̅_{design}* may be calculated according to: ${\vec{n}}_{res} ⋅ {\vec{n}}_{design} = \left‖{\vec{n}}_{res}\right‖ \left‖{\vec{n}}_{design}\right‖ cos δ .$ equation 7

Based on the scalar product of equation 7, an angle δ may be derived which is indicative for an angular orientation of the normal vector *n̅ᵣₑₛ* relative to the normal vector *n̅_{design}*: $δ = arccos \frac{1}{\sqrt{{a}^{2} + {b}^{2} + 1}} .$ equation 8

Here, *arccos* denotes the inverse of the trigonometric cosine function. Since both normal vectors *n̅ᵣₑₛ* and *n̅_{design}* are orthogonal to their respective planes, the angle δ also indicates a relative angular orientation of the best fit design surface 310 relative to the residual plane 330.

The angle δ may thus also be indicative for a deformation of the first surface of the lens. The angle δ may be representative for a presence of a mechanical wedge and for an extent of the mechanical wedge.

Any fitting procedures, as set out herein, may be based on a least-square minimizer. A least-square minimizer may be referred to as a mathematical algorithm or computational method designed to determine the optimal parameters of a model by minimizing the sum of the squared differences between observed data points and the corresponding values predicted by the model. The least-square minimizer may operate by iteratively adjusting the model parameters to reduce the overall discrepancy between the observed (e.g., measured data) and predicted (e.g., derived from a theory function) values, ultimately converging on a solution that provides the best fit according to the least-squares criterion.

Several algorithms may be implemented to perform a respective least-square minimization:
The Levenberg-Marquardt algorithm is a widely used method for solving nonlinear least squares problems. It ingeniously combines the gradient descent method and the Gauss-Newton method, adapting its approach based on the proximity to the optimal solution. When coefficients are far from their optimal values, it behaves more like the gradient descent method, while it acts more like the Gauss-Newton method when coefficients are close to their optimal values. This adaptive nature makes it particularly effective for a wide range of optimization problems.

The Trust-Region-Reflective algorithm is another method suitable for both nonlinear and linear least-squares problems with bound constraints. It employs a subspace trust-region method to determine a search direction at each iteration, making it particularly effective for problems with complex constraint structures.

The Active-Set algorithm is another approach for linear least squares problems. It may be seen as particularly well-suited for problems with linear and bound constraints, iteratively refining the solution by adjusting the active set of constraints. In cases where robust least squares fitting is required, particularly when dealing with outliers in the data, the Iteratively Reweighted Least Squares (IRLS) algorithm is often employed. This method iteratively fits the model by weighted least squares, calculates and standardizes adjusted residuals, and then calculates robust weights as a function of these standardized residuals. This process is repeated until convergence, making it particularly effective at minimizing the influence of outliers on the fit.

The Gauss-Newton method is a fundamental algorithm for nonlinear least squares problems. It operates under the assumption that the least squares function is locally quadratic in the coefficients and seeks to find the minimum of this quadratic. This method forms the basis for many more advanced optimization algorithms and is particularly effective when the initial guess is close to the optimal solution.

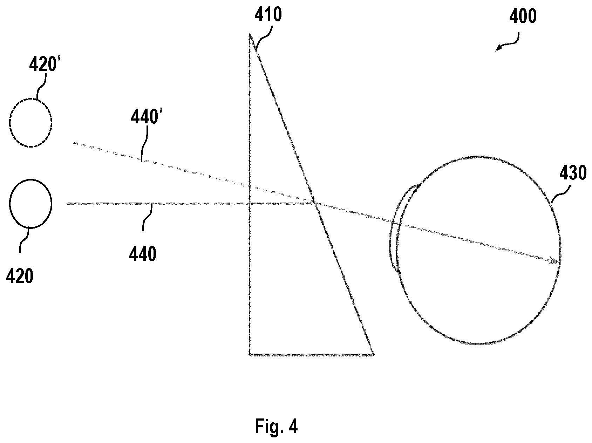

Fig. 4 shows an exemplary illustration 400 of an optical effect occurring when an optical wedge is present in a spectacle lens.

The presence of an optical wedge in a spectacle lens (e.g., the spectacle lens 100 or 200 as described with reference to Figs. 1 and 2, respectively) may be idealized by assuming a presence of a prism 410 arranged in between an object 420 and a wearer 430, wherein the wearer 430 may, e.g., wear glasses provided as spectacle lenses (e.g. the spectacle lenses 100 or 200) as an eyewear.

The presence of a prism 410 in the line of sight between the object 420 and the wearer 430 may disadvantageously alter the optical path 440 in between the object 420 and the wearer 430, effectively leading to a shifted optical path 440'. The effect of the shifted optical path 440' may be that the object 420 may appear as shifted object 420' located a different position as compared to the object 420.

Therefore, the presence of the optical wedge may lead to a falsifying of the optical properties of a spectacle lens. As this falsifying of the optical properties of the spectacle lens may be seen as undesired, a detailed characterization of the topology (e.g., of a physical topology) may be required which may be facilitated by aspects set out herein.

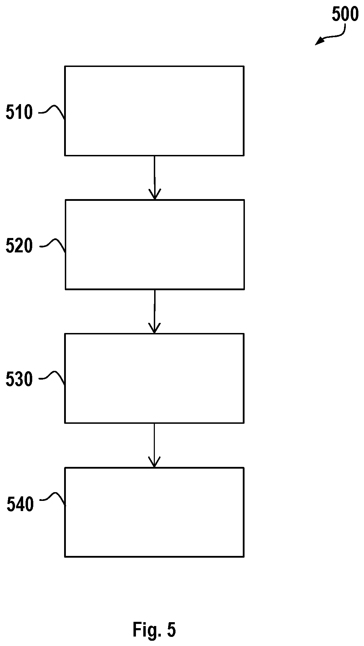

Fig. 5 shows a flowchart of a computer-implemented method 500 for determining a deformation of a first surface of a spectacle lens.

In step 510, an acquisition of a plurality of measurement data points which are associated with a physical topology of the first surface of the spectacle lens may be executed.

In step 520, an acquisition of a plurality of design data points which are associated with a design topology of the first surface of the spectacle lens may be executed.

In step 530, a calculation of a difference between the acquired plurality of measurement data points and the acquired plurality of design data points to obtain a plurality of residual data points may be executed.

In step 540, deriving of an angle between the plurality of residual data points and the acquired plurality of design data points, wherein the angle is indicative for the deformation of the first surface of the spectacle lens may be executed.

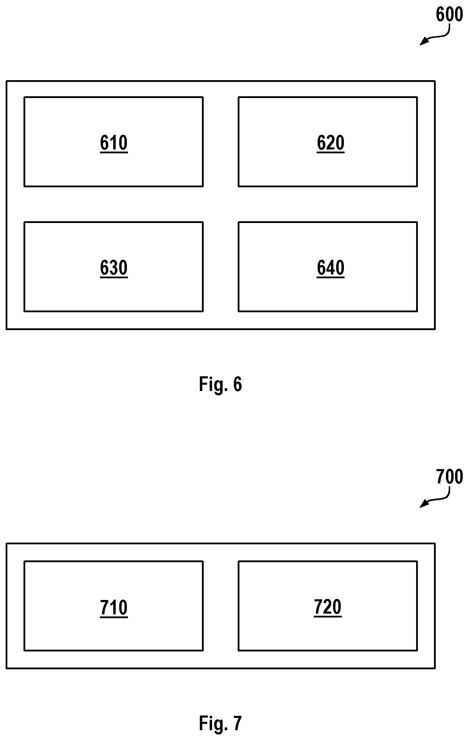

Fig. 6 shows a computer-implemented device 600 for determining a deformation of a first surface of a spectacle lens. The computer-implemented device 600 comprises means for acquiring a plurality of measurement data points 610, means for acquiring a plurality of design data points 620, means for calculating a difference 630 and means for deriving an angle 640.

The means for acquiring a plurality of measurement data points 610 may be configured to acquire a plurality of measurement data points which are associated with a physical topology of a surface of the spectacle lens.

The means for acquiring a plurality of design data points 620 may be configured to acquire a plurality of design data points which are associated with a design topology of the surface of the spectacle lens.

The means for calculating a difference 630 may be configured to calculate a difference between the acquired plurality of measurement data points and the acquired plurality of design data points to obtain a plurality of residual data points.

The means for deriving an angle 640 may be configured to derive an angle between the plurality of residual data points and the acquired plurality of design data points, wherein the angle is indicative for the deformation of the surface of the spectacle lens.

Fig. 7 shows a system 700 for determining a deformation of a surface of a spectacle lens. The system 700 comprises a computer implemented device 710 and a computer program 720.

The computer-implemented device 710 may be configured as described herein. The computer-implemented device may be the computer-implemented device 600 as described above.

The computer program 720 may be configured as described herein.

Although the present invention has been described with reference to examples of embodiments, it can be modified in many ways. It is apparent that instead of applying the described technique to spectacle lenses, it may be applied to molds used for casting precursor products e.g. of ophthalmic lenses. Such molds usually define the front- or back-side of such a precursor product and are arranged substantially parallel to each other such that a casting substance can be filled in between the two molds.

### LIST OF REFERENCE SIGNS

- 100: spectacle lens
- 110: first surface
- 120: second surface
- 130: design topology
- 140: shell of sphere
- 150: physical topology
- 200: spectacle lens
- 210: first surface
- 215: center of the sphere
- 220: second surface
- 230: design topology
- 250: physical topology
- 300: illustration of relative orientations
- 310: best fit design surface
- 320: measured surface
- 330: residual plane
- 400: illustration
- 410: prism
- 420: object
- 420': shifted object
- 430: wearer
- 440: optical path
- 440': shifted optical path
- 500: computer-implemented method
- 510: step
- 520: step
- 530: step
- 540: step
- 600: computer-implemented device
- 610: means for acquiring
- 620: means for acquiring
- 630: means for calculating a difference
- 640: means for deriving an angle
- 700: system
- 710: computer-implemented device
- 720: computer program
- CT: center thickness
- r: radius of first sphere

## Claims

1. A method (500), implemented on a processor, for determining a linear deviation of a first surface (110; 210) of a spectacle lens (100; 200) with respect to a second surface of the spectacle lens (100; 200), the method **characterized by**:
calculating (530) a residual surface based on a difference between data points related to the second surface and data points of a design surface; and
deriving (540) an angle between the residual surface and the first surface, wherein the angle is indicative for the linear deviation.

2. The method (500) of claim 1, wherein calculating (530) the residual surface further comprises:
fitting the plurality of residual data points to a theory function of a plane to obtain a representation of a residual plane (330) which is associated with the plurality of residual data points.

3. The computer-implemented method (500) of claim 1 or 2, further comprising:
acquiring (410) a plurality of measurement data points which are associated with a physical topology of the first surface (110; 200) of the spectacle lens (100
fitting the acquired plurality of measurement data points to a theory function of a sphere to obtain a representation of a sphere (250) which is associated with the acquired plurality of measurement data points;
determining coordinates of the center of the sphere (215) of the representation of the sphere (250) by subtracting a radius (r) of the representation of the sphere from a center thickness (CT) of the representation of the sphere (100; 200);
deriving the plurality of design data points by means of a design sphere about the determined coordinates, wherein the plurality of design data points represents a best fit design surface (310) of the plurality of measurement points.

4. The computer-implemented method (500) of claim 3, wherein the deriving of the plurality of design data points further comprises:
adding a sphere offset value to the derived coordinates of the center of the sphere (215) to obtain the plurality of design data points.

5. The computer-implemented method (500) of claims 2 and 3 or 2 and 4, further comprising:
calculating a normal vector of the residual plane (330);
determining a normal vector of the best fit design surface (310);
calculating an angle between the normal vector of the residual plane (330) and the normal vector of the best fit design surface (310), wherein the angle is indicative of the deformation of the first surface (110; 210) of the spectacle lens (100; 200).

6. The computer-implemented method (500) of claim 5, wherein the calculating of the angle further comprises:
calculating a scalar product between the normal vector of the residual plane (330) and the normal vector of the best fit design surface (310);
deriving the angle from the calculated scalar product.

7. The computer-implemented method (500) of one of the claims 1 - 6, wherein the acquiring of the plurality of measurement data points comprises a retrieving of empirically obtained data points, preferably from a confocal microscope that is configured to sample the first surface of the spectacle lens.

8. The computer-implemented method (500) of claim 7, wherein the plurality of empirically obtained data points comprises at least five data points.

9. The computer-implemented method (500) of one of the claims 7 or 8, wherein the empirically obtained data points are obtained such that they are representative of sampling the first surface (110; 210) of the spectacle lens (100; 200) preferably in a pattern of a spiral.

10. The computer-implemented method (500) of one of the claims 1 - 9, further comprising:
aligning a second surface (120) of the spectacle lens (100; 200), which is arranged opposed to the first surface (110; 210), with respect to a reference orientation.

11. The computer-implemented method (500) of one of the claims 1 - 10, wherein the deformation of the first surface (110; 210) is an optical wedge.

12. A computer program comprising instructions which, when the program is executed by a computer, cause the computer to carry out the steps of the computer-implemented method (500) of one of the claims 1 - 11.

13. A computer-implemented device (600) for determining a deformation of a first surface (110; 210) of a spectacle lens (100; 200), comprising:
means for acquiring (610) a plurality of measurement data points which are associated with a physical topology of the first surface (110; 210) of the spectacle lens (100; 200);
means for acquiring (620) a plurality of design data points which are associated with a design topology of the first surface (110; 210) of the spectacle lens (100; 200);
means for calculating (630) a difference between the acquired plurality of measurement data points and the acquired plurality of design data points to obtain a plurality of residual data points; and
means for deriving (640) an angle between the plurality of residual data points and the acquired plurality of design data points, wherein the angle is indicative for the deformation of the first surface (110; 210) of the spectacle lens (100; 200).

14. The computer-implemented device of claim 13, further comprising:
means for carrying out the steps of the computer-implemented method of one of the claims 1 - 11; and/or
means for executing the computer program of claim 12.

15. A system (700) for determining a deformation of a first surface (110) of a spectacle lens (100; 200), comprising:
the computer-implemented device (710) according to one of the claims 13 or 14; and
the computer program (720) of claim 12.
